# EUROPEAN PATENT APPLICATION

(11) **EP 4 556 384 A1**
(43) Date of publication of application: **21.05.2025**
(21) Application number: 24206873.2
(22) Date of filing: 16.10.2024
(51) Int. Cl.: B65B 25/14, B65B 35/40, B65B 63/02

(54) **A SYSTEM AND A METHOD FOR PACKING AND DELIVERING FOLDED ITEMS**

(30) Priority: 17.10.2023 IN 202321070784
(71) Applicant: Dandekar, Sanjay Madhav, Pune 411052 (IN); Deshpande, Datta Hari, Pune 411052 (IN)
(72) Inventor: DANDEKAR, Sanjay Madhav, 411052 Pune (IN); DESHPANDE, Datta Hari, 411052 Pune (IN); SUTAR, Umesh Baban, 411024 Pune (IN)
(74) Representative: Dr. Gassner & Partner mbB

(57) **Abstract**

The present invention relates to a system (100) for packing and delivering folded items. The system includes a feeding mechanism (10), a transport platform (20), a handling apparatus (50) and a delivery area (500). The handling apparatus (50), positioned next to the transport platform, picks up stacks and releases into receptacles at the delivery area (500). The delivery area (500) includes a workbench (60). A conveying mechanism (70) brings empty receptacles to the workbench (60). A holding unit (80) secures the receptacles placed on the workbench (60). A stack support arrangement (85) creates a partition within the empty receptacle (65) configuring individual compartments within the empty receptacle (65). After filling up each compartment with a stack of folded items, a pressing mechanism (90) presses the stack of folded items (1) within the filled receptacle (66). Further, a transfer mechanism (95) moves the filled receptacles to a final delivery area (500a).

## Description

### Field of the invention

The present invention relates to a system and a method for stacking and delivering of folded Items. More specifically, the present invention relates a system and method for securely holding, transporting and delivering folded items such as paper outserts used in pharmaceutical products ensuring seamless integration with automated packaging processes.

### Background of the invention:

The packaging and delivery of folded paper outserts, which are critical for conveying essential information with pharmaceutical products, are vital processes in the pharmaceutical industry. However, traditional systems for handling these outserts face several significant challenges, particularly in the delivery area, which is responsible for the final handling and dispatching of these inserts.

One of the primary disadvantages of previous inventions is the reliance on manual processes for transferring folded outserts into receptacles. Many systems require operators to manually move stacks of folded outserts from the transport platform to the receptacle. This manual handling increases labor costs, introduces variability and potential errors in the packaging quality, and can lead to outserts being misplaced or damaged during the transfer.

Moreover, traditional delivery area mechanisms often lack the automation necessary to maintain high efficiency and throughput. Without automated systems to manage the transfer of outserts, there can be significant delays and bottlenecks, reducing the overall productivity of the packaging process. Manual handling also increases the risk of repetitive strain injuries among workers, further impacting operational efficiency and employee health.

Furthermore, traditional systems may not provide adequate means to seamlessly integrate the delivery area with other automated packaging processes. This lack of integration can result in misalignments and inefficiencies as outserts move from one stage to the next, requiring additional manual intervention and reducing the overall efficiency of the packaging line.

Therefore, there is a requirement for an improved delivery area mechanism which overcomes few or all drawbacks of the existing technologies.

### Object of the invention

An object of the present invention is to provide a system for delivering a folded article which can reduce reliance on manual processes by incorporating automation to handle the transfer of outserts into receptacles efficiently and accurately.

One more object of the present invention is to provide a system for delivering a folded article which increase throughput, reduce bottlenecks, and improve the overall productivity of the packaging line.

One more object of the present invention is to provide a system for delivering a folded article which minimize damage to outserts during the transfer process, ensuring that they remain in pristine condition for insertion into pharmaceutical packaging.

Another object of the present invention is to provide a system for delivering a folded article which minimizes manual labor, reducing rework, and ensuring efficient use of receptacle capacity, the invention seeks to lower overall operational expenses associated with the packaging process.

Still one more object of the present invention is to provide a system for delivering a folded article which provides a more reliable packaging process that reduces downtime and maintenance requirements

### Summary of the invention

According to the present invention there is provided a system and method for packing and delivering folded items. The system comprises a feeding mechanism configured to transport folded items from a conveyor unit to a transport platform. This feeding mechanism sequentially introduces individual folded items into the transport platform, which facilitates the transportation of a stack or a partially assembled stack of the folded items from a first stacking area to a designated stacking area. Adjacent to the transport platform is a handling apparatus adapted to pick up at least one stack of folded items from the designated stacking area and release the stack of folded items into at least one receptacle arranged at a delivery area. The delivery area includes a workbench, a conveying mechanism, a holding mechanism, a stack support arrangement, a pressing mechanism and a transfer mechanism.

The workbench is adapted to hold at least one receptacle. The workbench is configured in the same plane as the transport platform to allow the handling apparatus to release the stack of folded items directly into the at least one receptacle arranged on the workbench. The conveying mechanism is to transport at least one receptacle to the workbench after a first receptacle is filled and transferred to a final delivery area. This conveying mechanism includes atleast one conveying unit and a pushing unit. The conveying unit is movable between a feeding area and the workbench, wherein the conveying unit is capable of holding atleast one empty receptacle received from the feeding area and travel upward to transfer the atleast one empty receptacle towards the platform and can release the atleast one empty receptacle when the conveying unit reaches the workbench.

The holding unit is arranged at a side portion of the workbench to secure the receptacle during the filling of the folded items. The holding unit engages with the sides of the receptacle to securely hold it on the platform. The stack support arrangement is movably arranged on the workbench of the system. The stack support arrangement creates a partition within the empty receptacle configuring individual compartments within the empty receptacle, such that the stack of folded items when released by the handling apparatus fills within the compartments created by the stack support arrangement.

The pressing mechanism is to presses the stack of folded items within the filled receptacle to support and ensure the alignment of the folded items within the empty receptacle after filling up each compartment with a predefined stack of folded items. The transfer mechanism is to transfer the filled receptacle to the final delivery area. This transfer mechanism includes a slider to move the filled receptacle to the final delivery area, with the slider returning to its original position after delivering the filled receptacle.

In an aspect, the conveying unit includes a holding arrangement to hold a corresponding empty receptacle, the holding arrangement release the corresponding empty receptacles when the conveying unit reaches the workbench.

In an aspect, the conveying mechanism may include a pushing unit to push the conveyor unit across the workbench platform to deliver the empty receptacle on the workbench platform.

In an aspect, the holding unit has a suction cup arranged stationarily at a side portion of the workbench. The holding unit activates when the conveying unit delivers atleast one receptacle in the workbench, such that the activation of the holding unit enables the engagement of the atleast one empty receptacle placed on the platform of the workbench to feed the stack of folded items from the handling apparatus to the atleast one receptacle. The holding unit releases the atlest one receptacle when the atleast one empty receptacle is completely filled with the folded items.

In an aspect, the transfer mechanism activates after the disengagement of the holding unit from the atleast one filled receptacle, the slider activates to push the at least one filled receptacle to a movable conveyor unit arranged perpendicular to the movement of the slider. The movable conveyor unit delivers the atleast one filled receptacle to the final delivery area for dispatch.

In an aspect, the stack support arrangement is movably arranged above the workbench and movable within the empty receptacle to configure compartments and to support a predefined amount of folded items or a stack of folded items within the atleast one empty receptacle. The stack support arrangement is arranged in a longitudinal axis along the length direction of the receptacle. The stack support arrangement includes two shafts arranged opposite to each other and in the longitudinal axis, each of the shaft is having a plurality of arms wherein the space between the adjacent pair of arms is adjustable laterally. Each arm extends in a direction substantially perpendicular to workbench platform such that when the empty receptacle is placed on the workbench platform, the stack support arrangement moves downwards and each of the arms moves within a portion of the empty receptacle configuring a partition or multiple compartments within the receptacle and provides support to the predefined amount of folded items or the stack of folded items within the corresponding compartments.

After filling up each compartment with a predefined stack of folded items, the pressing mechanism presses the stack of folded items within the filled receptacle to support and ensure the alignment of the folded items within the empty receptacle. The pressing mechanism may include a plurality of rods adapted to extend perpendicular towards the corresponding arms of the stack support arrangement. Each rods having a spacer arrangement to partially pass through the corresponding arms when the rods extend perpendicularly towards the corresponding arms and is adapted to slide downwards to engage with a top surface of the folded items arranged within the empty receptacle.

The pressing mechanism may slide upwards and retracts to the original position after when the stack support arrangement retracts to its original position, and before the slider pushes the at least one filled receptacle to the movable conveyor unit. After retraction of the pressing mechanism and the stack support arrangement, the atleast one filled receptacle is released from the hold of the holding unit and the slider activates to push the at least one filled receptacle to the movable conveyor unit.

The transfer mechanism activates only after the disengagement of the holding unit from the receptacle. The slider pushes the filled receptacle to the movable conveyor unit arranged perpendicular to the slider's movement. The movable conveyor delivers the filled receptacle to the final delivery area for dispatch. In an aspect, a sensing mechanism is provided to detect the fill level of the receptacle, activating and deactivating the holding unit and the stack support arrangement. This sensing mechanism includes optical sensors positioned around the delivery area. In an aspect, the slider is an "L" shaped slider that moves linearly along a sliding path configured on the workbench. The slider moves linearly toward the movable conveyor after the receptacle is filled with a predefined number of folded items.

In an aspect, the system may include a feeding area configured to feed at least one empty receptacle and transfer the atleast one empty receptacle to at least one conveying unit. The feeding area may include a conveyor belt to feed the empty receptacles towards the atleast one conveying units wherein the empty receptacles are fed manually into the feeding area and the conveyor belt conveys the empty receptacles towards the conveying unit.

In an aspect, a method for delivering folded items in accordance with the present invention is provided. The method includes the following steps.

At first, feeding atleast one empty receptacle from a feeding area to a conveying unit of a conveying mechanism. Transporting the atleast one empty receptacles to a workbench using the conveying unit, the conveying unit is capable of holding atleast one empty receptacle received from the feeding area and travel upward to transfer the atleast one empty receptacle towards the platform. Further, releasing and pushing the empty receptacle from the conveying unit towards the workbench platform by a pushing unit arrangement of the conveying mechanism.

Further, holding the empty receptacle on the workbench using a holding unit arranged at a side portion of the workbench, the holding unit engages with the sides of the empty receptacle. Then configuring multiple compartments using a stack support arrangement within the receptacle to support a predefined number of folded items or a stack of folded items within the corresponding compartments.

Further, releasing a stack of folded items into the corresponding compartments of the receptacle arranged at a delivery area on the work bench using a handling apparatus.

Next, pressing the stack of folded items within the receptacle by a pressing mechanism to support and ensure the alignment of the folded items within the receptacle. Then releasing the stack of folded items from the hold of stack support arrangement, pressing mechanism and the holding member.

Finally transferring the filled receptacle to a final delivery area using a transfer mechanism that includes a slider to move the filled receptacle, with the slider returning to its original position after delivering the filled receptacle.

### Brief description of drawings:

The advantages and features of the present invention will be understood better with reference to the following detailed description and claims taken in conjunction with the accompanying drawings, wherein like elements are identified with like symbols, and in which:
Figure 1 illustrates a schematic view of a system for packing and delivering folded items in accordance with the present invention is illustrated;
Figure 2a illustrates schematic view of a conveying mechanism and workbench conveying atleast one empty receptacle towards the workbench and filling atleast one receptacle with folded items using a handling apparatus;
Figure 2b illustrates another schematic view of the conveying mechanism and workbench conveying a filled receptacle and subsequent filling of atleast one empty receptacle;
Figure 2c illustrates a subsequent filling of atleast one empty receptacle and transferring direction of the filled receptacle;
Figure 2d illustrates a movement of the conveying unit to pick up another empty receptacle from the feeding area;
Figure 3a illustrates a side view showing the arrangement of support stack arrangement and pressing mechanism where the support stack arrangement is at the initial position positioned above the workbench and the empty receptacle;
Figure 3b illustrates another side view showing the arrangement of support stack arrangement and pressing mechanism where the support stack arrangement is being placed within the empty receptacle to create multiple compartments;
Figure 3c illustrates the filled receptacle within the multiple compartments created by the support stack arrangement;

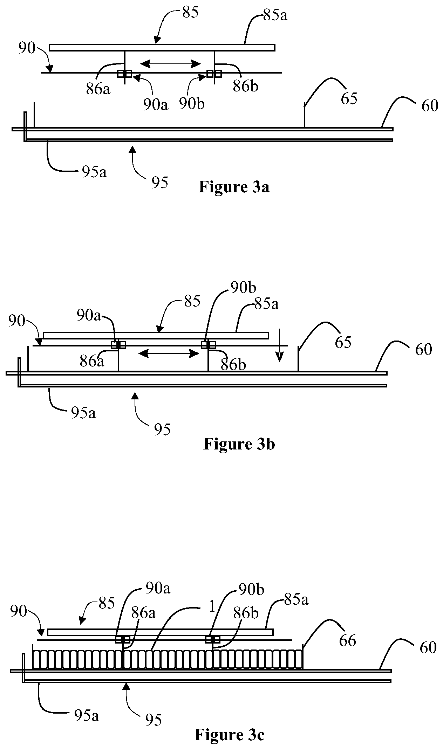

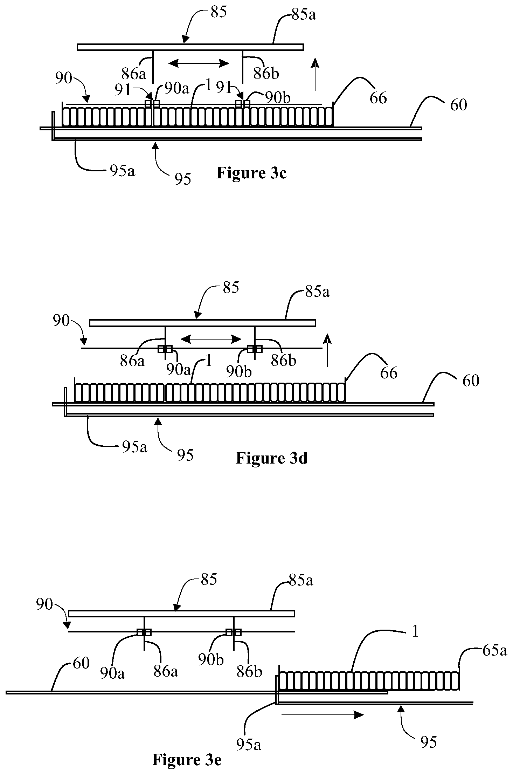

Figure 3c illustrates the upward movement of the stack support arrangement after the receptacle is being completely filled with folded items;
Figure 3d illustrates the pressing mechanism pressing the folded article from the top surface for ensuring proper alignment;
Figure 3e illustrates retracting position of the pressing mechanism and the stack support arrangement after the stack of folded items are filled completely within the empty receptacle;
Figure 3f illustrates the activation of the transfer mechanism, specifically the movement of the slider arrangement to deliver the filled receptacle towards a movable conveyor unit;

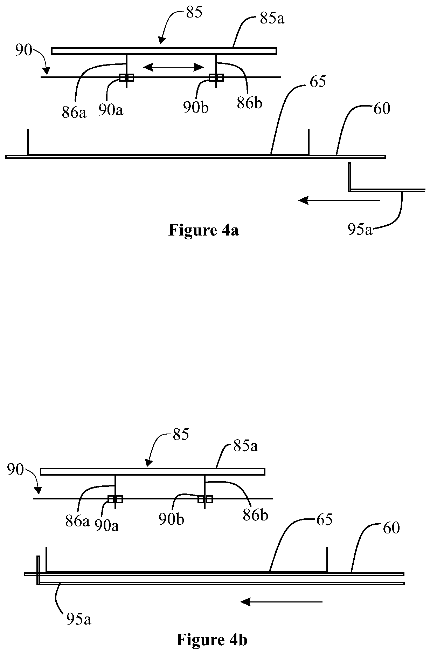

Figures 4a-4b illustrates the return of the slider arrangement after the filled receptacle is conveyed to the movable conveyor unit;

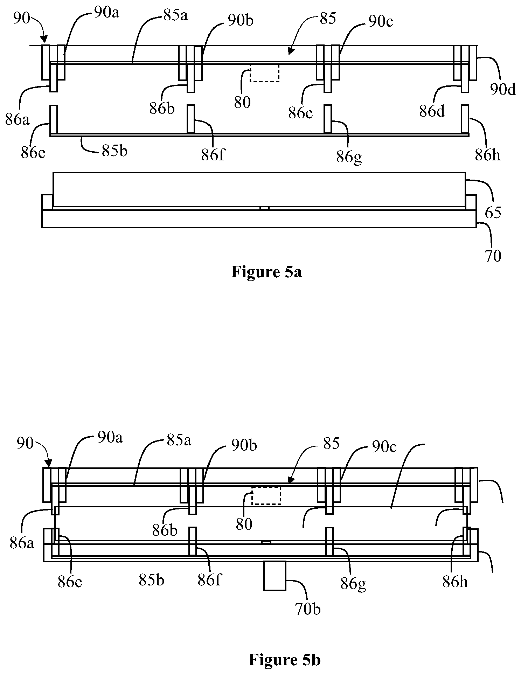

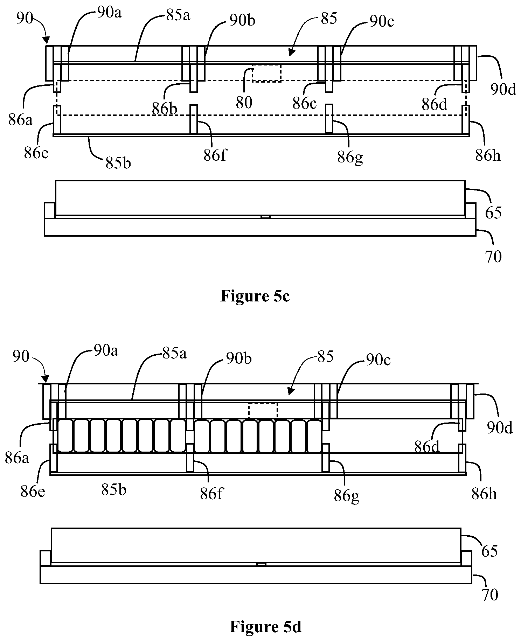

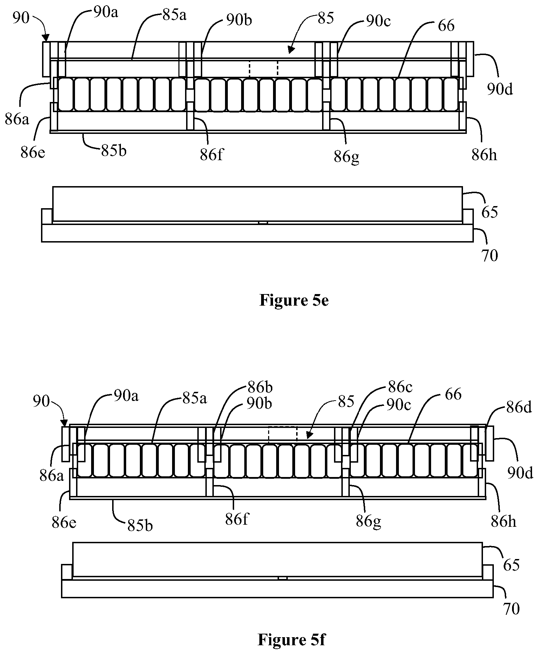

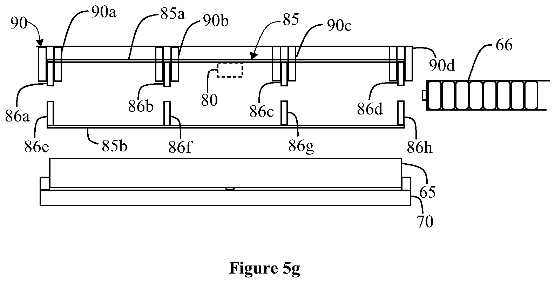

Figures 5a-5g illustrates a top view of the various positions of the support stack arrangement and the pressing mechanism when filling the folded items within the receptacle;

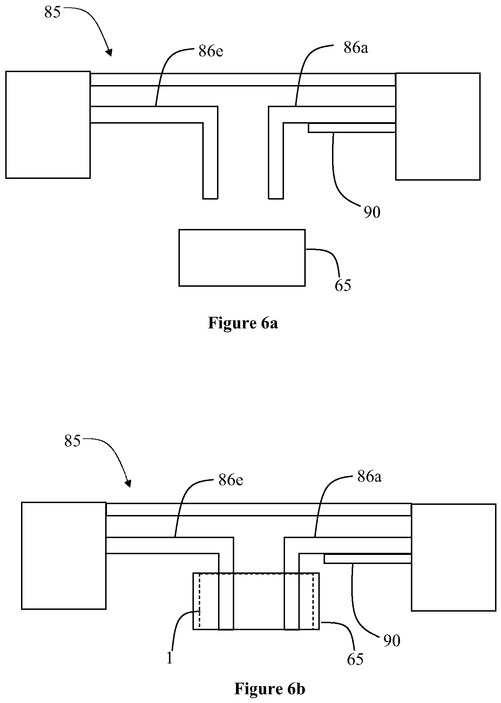

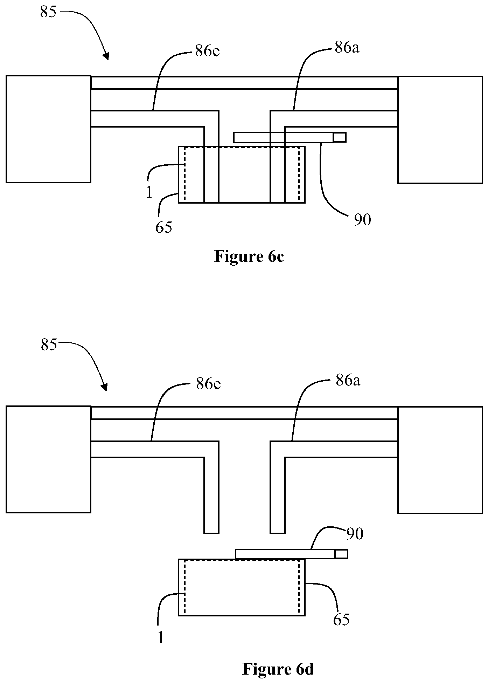

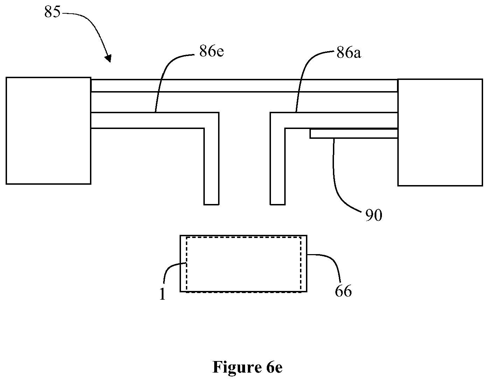

Figures 6a-6e illustrates a front view showing various positions of the support stack arrangement and the pressing mechanism when filling the folded items within the receptacle;

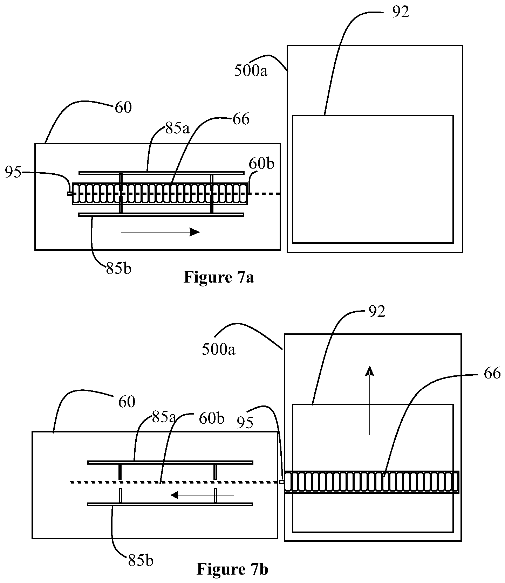

Figure 7a illustrates a top view showing the arrangement of folded items in a filled receptacle on the workbench;
Figure 7b illustrates the transfer of filled receptacle from the workbench to the movable conveyor unit on the final delivery area;

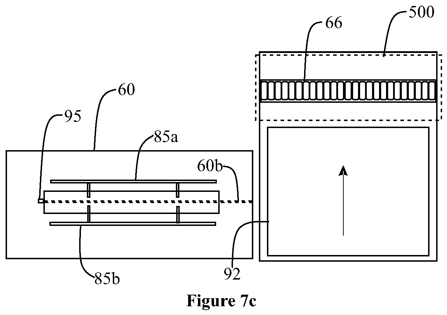

Figure 7c illustrates the movable conveyor unit delivering the final filled receptacle to the final delivery area; and

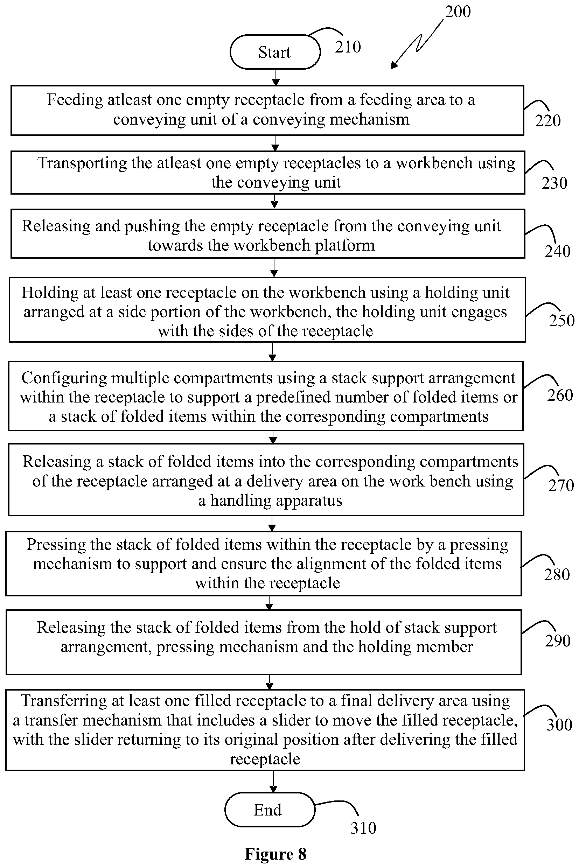

Figure 8 illustrates a flowchart showing a method for delivering folded items in accordance with the present invention.

### Detailed description of the invention

An embodiment of this invention, illustrating its features, will now be described in detail. The words "comprising," "having," "containing," and "including," and other forms thereof, are intended to be equivalent in meaning and be open-ended in that an item or items following any one of these words is not meant to be an exhaustive listing of such item or items, or meant to be limited to only the listed item or items.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item.

The disclosed embodiments are merely exemplary of the invention, which may be embodied in various forms.

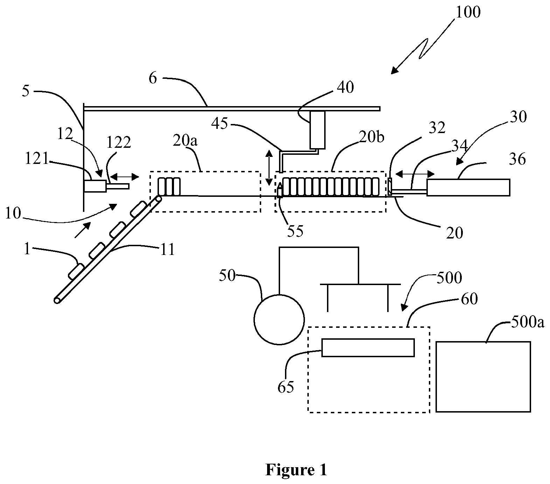

Referring now to figure 1, a system for packing and delivering folded items in accordance with the present invention is illustrated. Specifically, the system is used for stacking, packaging and delivering folded items oroutserts that are securely sealed using glue or any adhesives. The folded item (1) is a paper fold containing information in the form of write-ups, especially printed information or documentation that is folded and inserted into product packaging, such as pharmaceuticals, medical devices, and consumer goods. The system (100) includes a feeding mechanism (10), a transport platform (20), a support mechanism (30), a slider arrangement (40), a handling apparatus (50), a delivery area (500) including a workbench (60), a conveying mechanism (70), a holding unit (80), a stack support arrangement (85), a pressing mechanism (90) and a transfer mechanism (95).

The feeding mechanism (10) is configured to transport the folded items (1) from a conveyor unit (11) to a transport platform (20). The feeding mechanism (10) is positioned after, preferably not immediately after, an outsert folding unit (not shown), to ensure an organized feeding of the folded items (1). The feeding mechanism (10) sequentially introduces individual folded items (1) into the transport platform (20). Specifically, the feeding mechanism (10) includes a conveyor unit for transferring the folded item (1) to a first stacking area (20a) of the transport platform (20). The conveyor unit (11) is arranged in such a way that the folded items (1) are conveyed in the upstream direction. In another embodiment, the conveyor unit (11) is arranged in such a way that the folded items (1) are conveyed in the downstream direction as shown in Figure 1.

In the present embodiment, the feeding mechanism (10) includes a pusher unit (12) arranged within the feeding area and on a frame (5) arranged in the feeding area. In the present embodiment, the pusher unit (12) includes a cylinder (121) and a pusher (122). The pusher (122) interfaces with the folded items (1) before the folded items (1) enter the transport platform (20) and pushes the folded items (1) into the transport platform (20) and specifically towards the first stacking area (20a). The pusher unit (12) is capable of either pneumatic, hydraulic, or motor-driven operation. As the folded items (1) are placed in the feeding area, the pusher (122) of the pusher unit (12) engages, applying the required force to push each folded item (1) into the transport platform (20) to achieve an upright position of the folded items (1).

The pusher unit (12) is positioned within the feeding area where it interfaces with the folded items (1) before the folded items (1) enter the transport platform (20). In an embodiment, the pusher unit (12) is a linear actuator that facilitates the movement of folded items (1) from the feeding area into the transport platform (20) and eventually to the first stacking area (20a). Further, the pusher (122) can be actuated using various methods, including pneumatic systems, hydraulic systems, or motor-driven mechanisms. It may be obvious to a person skilled in the art to configure the pusher unit (12) with any other suitable actuation mechanism.

The feeding mechanism (10) may include a control unit which receives signals from sensors that detect the presence of a folded item (1) ready to be fed into the transport platform (20). Based on these signals, the control unit may activate the pusher (122) of the pusher unit (12) to push the folded items (1) into the first stacking area (20a) of the transport platform (20).

Referring again to Figures 1a-1c, the transport platform (20) facilitates transporting the upright stack or a partially assembled stack of folded items (1) into the stacking area. The transport platform (20) is generally a flat platform which provides a platform to convey the upright stack or a partially formed stack of folded items (1) towards the designated stacking area (20b).

In an embodiment, the transport platform (20) is movable, such that when the platform detects the specific quantity of folded items (1) in the transport platform (20), it gets activated to move the folded items (1), maintaining an upright stack or partially assembled stack. This motion is at the right angle to the direction of transportation, guiding the folded items (1) into the designated stacking area (20b) for further processing. Proximity sensors or photoelectric sensors may be integrated into the transport platform (20) to detect the presence and movement of the folded items (1). Automation controls linked to these sensors regulate the platform's speed and operation, ensuring efficient and synchronized movement of the folded items (1).

The support mechanism (30) is arranged along the transport direction of the folded items (1) which is above the transport platform (20). The support mechanism (30) acts as a deadweight, holding the folded items (1) in an upright position during transportation of the folded items (1) on the transport platform (20). The support mechanism (30) includes a support pad (32), a horizontal rod (34), and an actuation cylinder (36). The horizontal rod (34) extends in the transport direction and is connected to an actuation device (38) or a motorized actuator. The actuation device (38) can be a linear actuator to move the support mechanism (30). The support pad (32) is arranged on a free end of the horizontal rod (34) to support the folded items (1).

The support pad (32) is adapted to hold the folded items (1) in an upright position during transportation of the folded items along the transport platform (20). Specifically, the support pad (32) is arranged centrally to the transport platform (20) and is adapted to engage with the front face of the folded items (1) in the upright position. The support pad (32) is a vertical element arranged substantially perpendicular to the horizontal rod (34). The support mechanism (30) is constructed with mechanisms to facilitate controlled movement of the folded items (1) along the transport direction. In the present embodiment, the support mechanism (30) is movable in a length direction along the platform and facilitates the movement of a first set of folded items (1) from the first stacking area (20a) to the designated stacking area (20b) in a first cycle. The first cycle refers to a complete sequence of operations that begins with the initial handling and transportation of a first batch of folded items (1) from the first stacking area (24) and ends with their delivery to the designated stacking area (26).

Further referring to figure 1, the slider arrangement (40) is positioned at the feeding area of the folded items (1) to move the folded items (1) from the first stacking area (20a) to the designated stacking area (20b). Specifically, the slider arrangement (40) is arranged on the frame (5) near the feeding area, and the slider arrangement (40) has an inverted L-shaped pushing tool (45) which is movably arranged above the transport direction/the transport platform (20) to engage with a stacked folded item or a partially stacked folded item on the first stacking area (20a) and move the stacked folded item or a partially stacked folded item from the first stacking area (20a) to the designated stacking area (20b). Hereinafter, the inverted L-shaped pushing tool (45) is referred to as the pushing tool (45). It is obvious to a person skilled in the art to configure the shape of the pushing tool (45) according to the number of folded items (1), space constraints, attachment assemblies, or the like. The pushing tool (45) is movable back and forth in the transport direction. Specifically, the frame (5) has a guide (6) that facilitates the sliding motion of the slider arrangement (40) in the transport direction.

When the folded items (1) reach the first stacking area (20a) and a sufficient stack or a predefined number of folded items (1) are formed in the first stacking area (20a), the slider arrangement (40) is activated to move the folded items (1) towards the designated stacking area (20b). Specifically, the pushing tool (45) retracts in a downward direction from an initial position to reach a stack of folded items (1). Once the pushing tool (45) reaches the stack of folded items (1), the slider arrangement (40) slides along the transport direction toward the designated stacking area (20b). Once the folded item (1) is placed in the designated stacking area (20b), the pushing tool (45) moves upward and configures to the initial position. Further, the slider arrangement (40) retracts to the original position and secures near the feeding area. The slider arrangement (40) may be operable by pneumatic, hydraulic, or motor-driven systems.

After each operation, the slider arrangement (40) needs to reset to its original position to prepare for the next feeding cycle. A recoil and reset mechanism may be integrated to quickly retract the slider arrangement (40) to its initial position after each feed, readying it for the next cycle.

Once the folded items (1) reach the designated stacking area (26), a stopper arrangement (55) extends from or towards the transport platform (20) and engages with the folded items (1), holding the stack of folded items (1) within the space between the stopper arrangement (55) and the support pad (33). The stopper arrangement (55) and the support pad (32) ensure the stack of folded items (1) remains in the upright position. The stopper arrangement (50) and the support pad (32) also provide support to the folded items (1) from both ends.

Upon receiving the stack of folded items (1) in the designated stacking area (26) from the first stacking area (24), a control unit actuates the stopper arrangement (55) to hold the stack of folded items (1) in the upright position in the designated stacking area (20b). Then, the control unit of the handling apparatus (50) initiates the handling apparatus (50) to pick the stack of folded items (1) from the designated stacking area (20b) and deliver the first stack of folded items (1) into a receptacle arranged in a delivery area (500).

The delivery area (500) is provided adjacent to the transport platform (20). The delivery area (500) has at least one receptacle (65) which is adapted to receive the stack of folded items (1) from the designated stacking area (20b). Specifically, the handling apparatus (50) is arranged between the transport platform (20) and the delivery area (500) to transport the stack of folded items (1) from the designated stacking area (20b) to the delivery area (500).

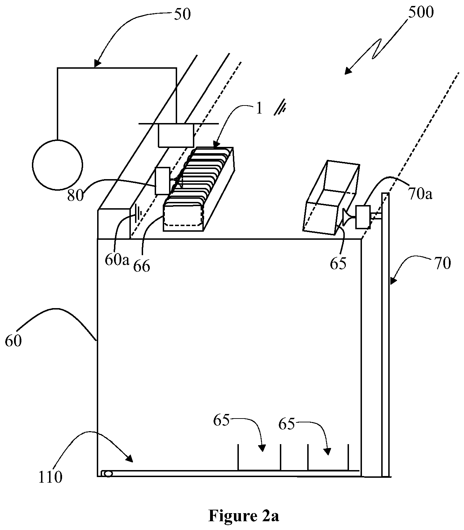

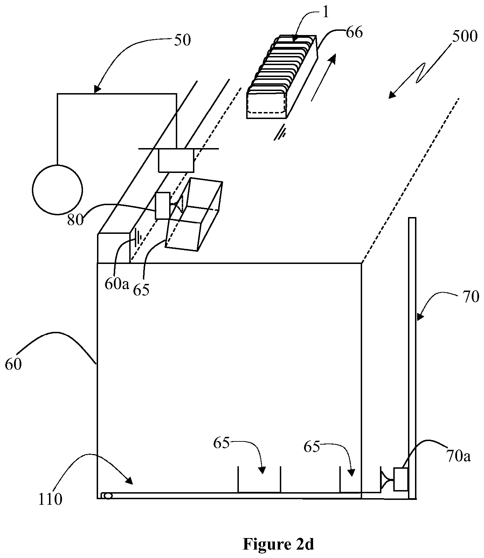

Referring now to figures 2a-2d, the delivery area (500) includes the workbench (60), the conveying mechanism (70), the holding unit (80), the stack support arrangement (85), the pressing mechanism (90) and the transfer mechanism (95). The workbench (60) is adapted to hold at least one receptacle, such as an empty receptacle (65) and a filled receptacle (66). The workbench (60) is a receptacle platform which is arranged in the same plane as the transport platform to allow the handling apparatus (50) to release the stack of folded items directly into the atleast one receptacle (65, 66) arranged in the workbench (60). In the present embodiment, the workbench (60) is a flat platform with a top surface adapted to hold atleast one receptacle (65, 66). It may be obvious to a person skilled in the art to configure the workbench (60) in such a way that it can hold multiple receptacles at the same time.

Further as shown in figures 2a-2d, the conveying mechanism (70) is to automate the transportation of empty receptacles or atleast one empty receptacle (65) towards the workbench (60) from where the folded items are transferred. The conveying mechanism (70) transports and dispose at least one empty receptacle (65) to the workbench (60) after the filled receptacle (66) is transferred to a final delivery area (500) from the workbench (60). The conveying mechanism (70) ensures a continuous supply of empty receptacles (65).

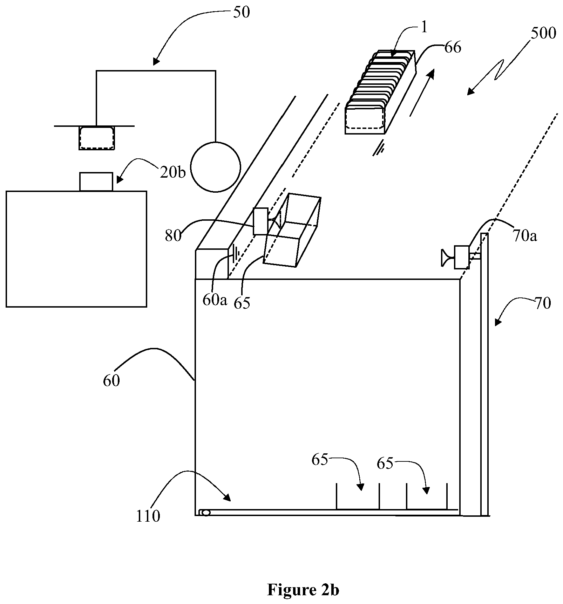

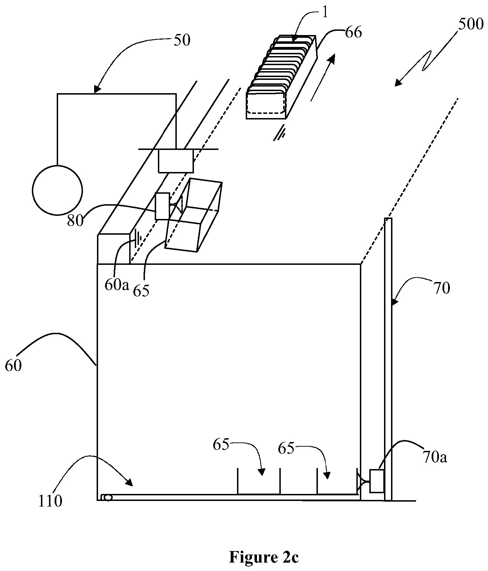

Referring again to figures 2a-2d, the conveying mechanism (70) includes atleast one conveying unit (70a) and a pushing unit (70b) as shown in figure 5b. The conveying unit (70a) is movable between a feeding area (110) and the workbench (60), wherein the conveying unit (70a) is capable of holding atleast one empty receptacle (65) received from the feeding area (110) and travel upward to transfer the atleast one empty receptacle (65) towards the workbench platform. Initially, the empty receptacles (65) are fed from the feeding area (110) arranged at a bottom portion of the workbench (60). The feeding area (110) is configured to feed at least one empty receptacle (65) and transfer the atleast one empty receptacle (65) to the conveying unit (70a). Referring to figure 2a, 2b, 2c, the feeding area (110) includes a conveyor belt to feed the empty receptacle (66) towards the conveying unit (70a). The empty receptacles (65) are fed manually or automatically into the feeding area (110) and the conveyor belt or a movable platform conveys the empty receptacles (65) towards the conveying unit (70a). The feeding area (110) is arranged on a bottom portion of the work bench (60), and the conveyor belt in the feeding area (110) is arranged adjacent to the floor. The conveyor belt is a generic conveyor belt operated by a motor mechanism to convey the empty receptacles (65). In an embodiment, multiple conveying units are arranged in the system. In such embodiment, as each of the conveying units moves upward, it brings the next empty receptacle (66) into alignment with the workbench platform.

In the present embodiment, the conveying unit (70a) is adapted to securely hold an empty receptacle (65), specifically attaching an empty receptacle (65) from the feeding area (110) and releasing the empty receptacle (65) when it reaches the workbench (60). In the present embodiment, the conveying unit (70a) includes a holding arrangement to hold a corresponding empty receptacle (65). The holding arrangement release the corresponding empty receptacles (65) when the conveying unit (70a) reaches the workbench (60). In the present embodiment, the holding arrangement is a suction cup operable by a pneumatic mechanism. The suction cup ensures that the empty receptacles (65) are securely held during the vertical movement. It is positioned to engage with the receptacle's side surface or top, depending on the receptacle's design.

In the present embodiment, as shown in figure 2a-2d, a vertical lift mechanism (not shown) is used for the upward and downward movement of the conveying unit (70a). This vertical lift mechanism can be implemented using a linear actuator, hydraulic lift, or motorized pulley system. In the present embodiment, an electric motor drives the actuator or pulley system, providing the necessary force to lift and lower the conveying unit.

In an embodiment (not shown in figures), the conveying unit (70a) is a tray or platform designed to hold an empty receptacle (65). The conveying unit is designed to stack vertically and move individually to align with the workbench platform. The conveying unit (70a) may have a flat surface where the receptacle rests. The conveying unit (70a) may include slots or recesses to engage with the suction unit. Brackets may be attached to the sides of the receptacle to connect with the vertical lift mechanism.

Further, optical or proximity sensors (not shown) detect the presence of an empty receptacle (65) and signal the control system (not shown) to activate the holding arrangement of the conveying unit (70a). The holding arrangement secures the empty receptacle (65) within the conveying unit (70a) during transport. The holding arrangement engages with the empty receptacle (65) when it is held in the conveying unit (70a) and releases the empty receptacle (65) once it reaches the workbench platform.

The holding arrangement is a flexible suction cup that create a vacuum seal with the receptacle's surface. In the present embodiment, a vacuum pump (not shown) may be provided to generate the suction force needed to hold the empty receptacle (65) securely. The pump is connected to the holding arrangement via flexible tubing. Further, valves may be used to regulate the vacuum pressure and release the suction when the receptacle reaches the platform.

In an embodiment, pressure sensors monitor the vacuum level to ensure the empty receptacle (65) is held securely. These sensors provide feedback to the control system to adjust the suction as needed. The control system coordinates the movement of the conveying unit (70a), operation of the holding arrangement, and interaction with the workbench platform and handling apparatus (50). The control system interfaces with all sensors (e.g., optical, proximity, pressure) and actuators (e.g., motors, valves) to control the entire mechanism. In an embodiment, a touch screen or control panel for operators to monitor and control the system, set parameters, and respond to alerts or errors.

The control system (not shown) activates the vertical lift mechanism, raising the conveying unit (70a) with the empty receptacle (65) to the workbench platform level. The holding arrangement releases the empty receptacle (65) onto the workbench platform after reaching the same level.

The empty receptacle (65) is released and pushed from the conveying unit (70a) by the pushing unit (70b) towards the workbench platform as shown in figure 5b. Specifically, the pushing unit (70b) pushes the conveyor unit (70a) across the workbench platform to deliver the empty receptacle (65) on the workbench platform. The pushing unit (70b) pushes the empty receptacle (65) towards the workbench platform for getting it filled with stack of folded items from the handling apparatus (500. The pushing unit (70b) can be a pneumatically operated mechanism which pushes the empty receptacle (65) towards the workbench platform.

Referring now to figures 5a-5e, the system (100) further includes the stack support arrangement (85). The stack support arrangement (85) is movably arranged on the workbench (60) of the system (100). The stack support arrangement (85) creates a partition within the empty receptacle (65) configuring individual compartments within the empty receptacle (65), such that the stack of folded items when released by the handling apparatus (50) fills within the compartments created by the stack support arrangement (85).

In the present embodiment, the stack support arrangement (85) is movably arranged above the workbench (60) and movable within the empty receptacle (65) to configure compartments and to support a predefined amount of folded items or a stack of folded items when the empty receptacle (65) gets filled.

The stack support arrangement (85) is arranged in a longitudinal axis along the length direction of the empty receptacle (65) when the empty receptacle (65) is held on the workbench platform. The stack support arrangement (85) includes two shafts (85a, 85b) arranged opposite to each other along the longitudinal axis. Each shafts (85a, 85b) are connected together at both the ends and operatively coupled with a lifting mechanism (not shown) to facilitate the up and down movement of the stack support arrangement (85) above the workbench platform. The lifting mechanism can be operated electrically or pneumatically or hydraulically.

As shown in figures 5a-5e, each of the shaft (85a, 85b) of the stack support arrangement (85) includes a plurality of arms (86a-86d, 86e-86h). Each arm (86a-86d, 86e-86h) extends in a direction substantially perpendicular to workbench platform. The arms (86a-86d, 86e-86h) may have an inverted "L" shape where one portion of the arm (86a-86d, 86e-86h) can be inserted within the empty receptacle (65) and another portion connected to the shaft (85a, 85b). The stack support arrangement (85) moves downwards when the empty receptacle (65) is held within the workbench platform and each of the arms (86a-86d, 86e-86h) from both the shafts (85a, 85b) moves within a portion of the empty receptacle (65) configuring a partition or multiple compartments within the empty receptacle (65). This arrangement of the arms (86a-86d, 86e-86h) within the empty receptacle (65) also provides support to the predefined amount of folded items (1) or the stack of folded items (1) when filled within the corresponding compartments.

In the present embodiment, the space between the adjacent pair of arms (86a-86d, 86e-86h) along the shafts (85a, 85b) are adjustable laterally, so that the user can create partition on the empty receptacle (65) according to the required dimensions. The space between the arms (86a-86d, 86e-86h) can be adjusted manually or by a motor-controlled operation.

As shown in figures 2a-2d, once, the empty receptacle (65) is placed on the workbench platform, the handling apparatus (50) transfers folded items into the empty receptacle (65). Specifically, the handling apparatus (50) is configured to release a stack of folded items (1) into the corresponding compartments of the receptacle (65) configured by the stack support arrangement (85) as shown in figures 5b-5e. The plurality of arms (86a-86d, 86e-86h) between the stacks of the folded items (1) provides the required support for the folded items (1) to stay in the upright position. By way of non-limiting example as shown in figures 3a-3e, the stack support arrangement (85) may include 2 arms (86a, 86b) positioned at equal distance laterally configuring three compartments to hold corresponding three stacks of folded items in the upright position as shown in figures 5a-5e. It may be obvious to a person skilled in the art to include more than two arms on each shaft (85a, 85b) of the stack support arrangement (85). The stack support arrangement (85) activates only when the empty receptacle (65) is placed on the workbench platform and held by the holding unit (80).

Further, after filling up each compartment with a predefined stack of folded items, the pressing mechanism (90) presses the stack of folded items within the filled receptacle (66) containing folded items (1) to support and ensure the alignment of the folded items (1) within the filled receptacle (66).

Referring to figures 5a-5g, the pressing mechanism (90) includes a plurality of rods (90a, 90b, 90c, 90d) adapted to extend perpendicular towards the corresponding arms (86a-86d) of the stack support arrangement (85). Each rod (90a, 90b, 90c, 90d) has a spacer arrangement (91) as shown in figure 3c to partially pass through the corresponding arms (86a-86d) arranged at one of the shaft (85a) when the rods (90a, 90b, 90c, 90d) extends perpendicularly towards the corresponding arms (86a-86d). Specifically, a space is configured on each of the rods (90a, 90b, 90c, 90d) to pass through the corresponding arms (86a-86d) partially. Each rods (90a, 90b, 90c, 90d) extends perpendicularly towards the corresponding arms (86a-86d) at one side of the shaft (85a) and slides downwards to engage with a top surface of the folded items (1) arranged within the filled receptacle (66) as shown in figures 6a-6e.

The pressing mechanism (90) slides upwards and retracts to the original position after when the stack support arrangement (85) retracts to its original position, and before a slider (95a) pushes the filled receptacle (66) to a movable conveyor unit (92).

After retraction of the pressing mechanism (90), the filled receptacle (65a) is released from the hold of the holding unit (80) and the slider (95a) activates to push the filled receptacle (65a) to the movable conveyor unit (92).

The holding unit (80) arranged at a side portion of the workbench (60) secures the receptacle in the workbench (60) during filling the folded items into the receptacles (65). The holding unit (80) engages with the sides of the receptacle (65) as shown in figures 2a-2d to securely hold the receptacle (65) within the platform.

The holding unit (80) is a suction cup arranged stationarily at a side portion of the workbench (60). The holding unit (80) activates when the conveying unit (70a) delivers atleast one empty receptacle (65) in the workbench (60), such that the activation of the holding unit (80) enables the engagement of the atleast one empty receptacle (65) placed on the platform of the workbench (60) to feed the stack of folded items from the handling apparatus (50) to the atleast one receptacle (65). The holding unit (80) releases the receptacle when the receptacle (66) is completely filled with the folded items (1).

In an embodiment, the system (100) includes a sensing mechanism (not shown) to detect the fill level of the receptacle (65) to activate and deactivate the holding unit (80). The sensing mechanism includes optical sensors positioned around the delivery area (500) to sense the fill level of the receptacle (65). Once the sensing mechanism detects a predefined fill of folded items within the receptacle (65), the holding unit (80) releases the filled receptacle (65a).

Subsequently the transfer mechanism (95) transfers the filled receptacle (65a) from the workbench platform and delivers to the final delivery area. The next empty receptacle (65) is raised by the conveying unit (70a) to the workbench platform as shown in figure 2a. The process repeats, ensuring a continuous supply of empty receptacles (65) and efficient removal of filled receptacles (66).

In the present embodiment as shown in figures 4a-4c, the transfer mechanism (95) includes the slider (95a) to move the filled receptacle (66), with the slider (95a) returning to its original position after delivering the filled receptacle to the final delivery area (500). The transfer mechanism (95) activates after disengagement of the holding unit (80) from the at least one receptacle.

Before when the empty receptacle (65) is filled with folded items (1) by the handling apparatus (50), the stack support arrangement (85) accommodates within the empty receptacle (65) configuring multiple compartments within the empty receptacle (65) as shown in figures 3a-3d, 5a-5e. When the empty receptacles (65) are aligned with the handling apparatus (50), a stack of folded items (1) are filled within the corresponding compartments of the receptacles (65) configured by the stack support arrangement (85). After filling up each compartment with a predefined stack of folded items, the rods (90a, 90b, 90c, 90d) of the pressing mechanism (90) slide down along the arms (86a-86d) of the stack support arrangement (85) to press the folded items (1) from the top position. The pressing mechanism (90) keeps on pressing the folded items (1) until the stack support arrangement (85) is lifted vertically by the lifting mechanism. When the stack support arrangement (85) is lifted, the pressing mechanism (90) ensures that the folded items (1) are aligned within the filled receptacle (66).

Once the stack support arrangement (85) is moved back to the original position, the pressing mechanism (90) retracts and moves to its original position. Specifically, the pressing mechanism (90) slides upwards and retracts to the original position after when the stack support arrangement (85) retracts to its original position, and before the slider (95a) pushes the at least one filled receptacle (66) to the movable conveyor unit (92). Once both the stack support arrangement (85) and the pressing mechanism (90) moves back to their respective original position which is above the workbench not in contact with the filled receptacle (66), the slider (95a) activates to push the filled receptacle (66) to the movable conveyor unit (92) as shown in figures 7a-7c. Specifically, after retraction of the pressing mechanism (90) and the stack support arrangement (85), the filled receptacle (66) is released from the hold of the holding unit (80) and the slider (95a) activates to push the filled receptacle (65a) to the movable conveyor unit (92).

In the present embodiment, the slider (95a) pushes the filled receptacle (66) to the movable conveyor unit (92) arranged perpendicular to the slider's (95a) movement, and the conveyor unit (92) delivers the filled receptacle (66) to the final delivery area (500) for dispatch. In the present embodiment, the slider (95a) is an "L" shaped member with a slider head and a slider tail which moves linearly along a sliding path (60b) configured on the workbench (60) as shown in figures 3a-3b. The sliding path (60b) is a path configured for the movement of the slider (95a). The sliding path (60b) is generally in a straight line with guide rails to support the movement of the slider (95a). The slider (95a) is adapted to move linearly towards the conveyor unit through the sliding path (60b) after the receptacle is filled with a predefined number of folded items. The slider head is configured to support a portion of the filled receptacle (66) when the filled receptacle (66) is pushed to the final delivery area (500a) along the longitudinal axis.

Once the slider (95a) pushes the filled receptacle (66) onto the movable conveyor unit (92), the movable conveyor unit (92) moves the filled receptacle (66) towards the final delivery area (500a) for dispatch as shown in figure 7c. In the present embodiment, as shown in figure 4c, the conveyor unit (70a) moves in a direction perpendicular to the movement of the direction of the slider (95a). In another embodiment, the movable conveyor unit may have an arrangement to push the filled receptacle towards the final delivery area (500a).

After, the slider (95a) delivers the filled receptacle (66) into the movable conveyor unit (92), the slider head slides back to the original position as shown in figures 4a and 4b. When the receptacle (65) is filled with the folded items (1), the slider head as shown in figure 4b engages with the next batch of filled receptacle (66) with folded items (1) to transfer towards the movable conveyor unit (92).

In an embodiment as shown in figure 8, a method (200) for delivering folded items in accordance with the present invention is illustrated. For the sake of brevity, the method (200) is described in conjunction with the system (100).

The method (200) starts at step 210.

At step 220, atleast one empty receptacle is fed manually or automatically from a feeding area to atleast one conveying unit of a conveying mechanism. The feeding area includes a conveyor belt to feed the empty receptacle towards the at least one conveying unit, wherein the empty receptacles are fed manually into the feeding area and the conveyor belt conveys the empty receptacles towards the conveying units.

At step 230, the atleast one empty receptacles are transported to a workbench using the conveying mechanism. The conveying mechanism includes a conveying unit which is capable of holding atleast one empty receptacle received from the feeding area and travel upward to transfer the atleast one empty receptacle towards the platform. The conveying unit securely hold and releases the receptacle when it reaches the workbench.

At step 240, the empty receptacle is released and pushed from the conveying unit by a pushing unit towards the workbench platform. The pushing unit can be a pneumatically operated mechanism which pushes the empty receptacle towards the workbench platform.

At step 250, the at least one receptacle is held on the workbench using a holding unit arranged at a side portion of the workbench. Specifically, the holding unit engages with the sides of the receptacle.

At step 260, multiple compartments are configured using a stack support arrangement within the receptacle to support a predefined number of folded items or a stack of folded items within the corresponding compartments.

At step 270, a stack of folded items are released into the corresponding compartments of the receptacle arranged at a delivery area on the work bench using a handling apparatus.

At step 280, the stack of folded items within the receptacle is pressed by a pressing mechanism to support and ensure the alignment of the folded items within the receptacle.

Further at step 290, the stack of folded items are released from the hold of stack support arrangement, pressing mechanism and the holding member.

At step 300, the at least one filled receptacle is transferred to a final delivery area using a transfer mechanism that includes a slider to move the filled receptacle, with the slider returning to its original position after delivering the filled receptacle.

The method (200) ends at step 310.

In the present embodiment, two stack support arrangement are movably arranged above the workbench to support a predefined amount of folded items or a stack of folded items within the at least one receptacle. Each of the stack support arrangement includes a shaft having a plurality of vertical rods adjustable laterally between their spaces to accommodate within the receptacle, configuring multiple compartments within the space of the receptacle to support the predefined amount of folded items or the stack of folded items within the corresponding compartments configured by the stack support arrangement.

When the stack support arrangement is retracted to its original position after filling each compartment with a predefined stack of folded items and after the release of filled receptacle from the hold of the holding unit, the slider is activated to push the at least one filled receptacle to a movable conveyor unit.

In the present embodiment, the method (200) includes the step of activating and deactivating the holding unit based on the fill level detected by the sensing mechanism to ensure accurate filling of the receptacle. The holding unit uses suction cups to hold the receptacle. The holding unit is arranged stationarily at a side portion of the workbench, and the holding unit activates when the conveying unit delivers at least one receptacle to the workbench, enabling engagement of the receptacle to feed the stack of folded items, and releasing the receptacle when it is completely filled. Further, activating the transfer mechanism after disengagement of the holding unit from the at least one receptacle, with the slider pushing the filled receptacle to the movable conveyor unit arranged perpendicular to the slider's movement, and the conveyor unit delivering the filled receptacle to the final delivery area for dispatch.

Therefore the present invention has an advantage of providing a system for delivering an folded article which can reduce reliance on manual processes by incorporating automation to handle the transfer of outserts into receptacles efficiently and accurately. The system helps in an increase throughput, reduce bottlenecks, and improve the overall productivity of the packaging line. The system can minimize damage to outserts during the transfer process, ensuring that they remain in pristine condition for insertion into pharmaceutical packaging. Further, the system can minimize manual labor, reducing rework, and ensuring efficient use of receptacle capacity, the invention seeks to lower overall operational expenses associated with the packaging process. Also, the system can provide a more reliable packaging process that reduces downtime and maintenance requirements

The foregoing descriptions of specific embodiments of the present invention have been presented for purposes of illustration and description. They are not intended to be exhaustive or to limit the present invention to the precise forms disclosed, and obviously, many modifications and variations are possible in light of the above teaching. The embodiments were chosen and described in order to explain the principles of the present invention best and its practical application, to thereby enabling others skilled in the art to best utilise the present invention and various embodiments with various modifications as are suited to the particular use contemplated. It is understood that various omission and substitutions of equivalents are contemplated as circumstance may suggest or render expedient, but such are intended to cover the application or implementation without departing from the scope of the claims of the present invention.

## Claims

1. A system (100) for packing and delivering of folded items, the system (100) comprising:
a feeding mechanism (10) configured to transport the folded items (1) from a conveyor unit (11) to a transport platform (20), the feeding mechanism (10) sequentially introduces individual folded items (1) into the transport platform (20) and the transport platform (20) facilitates in transportation of the stack or a partially assembled stack of the folded items (1) from a first stacking area (20a) to a designated stacking area (20b): and
a handling apparatus (50) arranged adjacent to the transport platform (20), the handling apparatus (50) is adapted to pick up at least one stack of folded items from the designated stacking area (20b) and release the stack of folded items into atleast one receptacle (65) arranged at a delivery area (500), **characterized in that** the delivery area (500) comprises:
a workbench (60) adapted to hold at least one receptacle (65), the workbench (60) being a platform configured in the same plane as the transport platform (20) to allow the handling apparatus (50) to release the stack of folded items directly into the atleast one receptacle (65) arranged on the workbench (60);
a conveying mechanism (70) to transport at least one receptacle (65) to the workbench (60), the conveying mechanism (70) include a conveying unit (70a) adapted to hold at least one empty receptacle (65) and movable between a feeding area (110) and the workbench (60), wherein the conveying unit (70a) is capable of holding atleast one empty receptacle (65) received from the feeding area (110) and travel upward to transfer the atleast one empty receptacle (65) towards the platform and can release the atleast one empty receptacle (65) when the conveying unit reaches the workbench (60);
a holding unit (80) arranged at a side portion (60a) of the workbench (60) to secure the atleast one receptacle (65) in the workbench (60) during filling the folded items into the receptacles (65), the holding unit (80) engages with the sides of the atleast one receptacle (65) to securely hold the receptacle (65) within the platform;
a stack support arrangement (85) movably arranged on the workbench (60) of the system (100), the stack support arrangement (85) creates a partition within the empty receptacle (65) configuring individual compartments within the empty receptacle (65), such that the stack of folded items (1) when released by the handling apparatus (50) fills within the compartments created by the stack support arrangement; and
a transfer mechanism (95) to transfer at least one filled receptacle (66) to the final delivery area (500), the transfer mechanism (95) including a slider (95) to move at least one filled receptacle (66) to a final delivery area (500a), with the slider (95) returning to its original position after delivering the filled receptacle (66).

2. The system (100) as claimed in claim 1, wherein the conveying unit (70a) includes a holding arrangement to hold a corresponding empty receptacle (65), the holding arrangement release the corresponding empty receptacles (65) when the conveying unit reaches the workbench (60).

3. The system (100) as claimed in claim 1, wherein the conveying mechanism (70) includes a pushing unit (70b) to push the conveyor unit (70a) across the workbench platform to deliver the empty receptacle (65) on the workbench platform.

4. The system (100) as claimed in claim 1, wherein the holding unit (80) has a suction cup arranged stationarily at a side portion (60a) of the workbench (60), the holding unit (80) activates when the conveying unit (70a) delivers atleast one receptacle (65) in the workbench (60), such that the activation of the holding unit (80) enables the engagement of the atleast one empty receptacle (65) placed on the platform of the workbench (60) to feed the stack of folded items (1) from the handling apparatus (50) to the atleast one receptacle (65), wherein the holding unit (80) releases the atlest one receptacle (65) when the atleast one empty receptacle (65) is completely filled with the folded items (1).

5. The system (100) as claimed in claim 1, wherein the transfer mechanism (95) activates after the disengagement of the holding unit (80) from the atleast one filled receptacle (66), the slider (95) activates to push the at least one filled receptacle (66) to a movable conveyor unit (92) arranged perpendicular to the movement of the slider (95), the movable conveyor unit (92) delivers the atleast one filled receptacle (66) to the final delivery area (500) for dispatch.

6. The system (100) as claimed in claim 1, wherein the stack support arrangement (85) is movably arranged above the workbench (60) and movable within the empty receptacle (65) to configure compartments and to support a predefined amount of folded items or a stack of folded items within the atleast one empty receptacle (65).

7. The system (100) as claimed in claim 6, wherein the stack support arrangement (85) is arranged in a longitudinal axis along the length direction of the receptacle, the stack support arrangement (85) includes two shafts (85a, 85b) arranged opposite to each other and in the longitudinal axis, each of the shaft (85a, 85b) is having a plurality of arms (86a-86d, 86e-86h) wherein the space between the adjacent pair of arms (86a-86d, 86e-86h) are adjustable laterally, each arm (86a-86d, 86e-86h) extends in a direction substantially perpendicular to workbench platform such that when the empty receptacle (65) is placed on the workbench platform, the stack support arrangement (85) moves downwards and each of the arms (86a-86d, 86e-86h) moves within a portion of the empty receptacle (65) configuring a partition or multiple compartment within the receptacle and provides support to the predefined amount of folded items or the stack of folded items within the corresponding compartments.

8. The system (100) as claimed in claim 1, wherein after filling up each compartment with a predefined stack of folded items, a pressing mechanism (90) presses the stack of folded items (1) within the filled receptacle (66) to support and ensure the alignment of the folded items within the empty receptacle (65).

9. The system (100) as claimed in claim 8, wherein the pressing mechanism (90) includes a plurality of rods (90a, 90b, 90c, 90d) adapted to extend perpendicular towards the corresponding arms (86a-86d) of the stack support arrangement (85), each rods (90a, 90b, 90c, 90d) having a spacer arrangement (91) to partially pass through the corresponding arms (86a-86d) when the rods (90a, 90b, 90c, 90d) extends perpendicularly towards the corresponding arms (86a-86d) and is adapted to slide downwards to engage with a top surface of the folded items (1) arranged within the empty receptacle (65).

10. The system (100) as claimed in claim 8, wherein the pressing mechanism (90) slides upwards and retracts to the original position after when the stack support arrangement (85) retracts to its original position, and before the slider (95) pushes the at least one filled receptacle (66) to the movable conveyor unit (92).

11. The system (100) as claimed in claim 10, wherein after retraction of the pressing mechanism (90) and the stack support arrangement (85), the atleast one filled receptacle (66) is released from the hold of the holding unit (80) and the slider (95) activates to push the at least one filled receptacle (66) to the movable conveyor unit (92).

12. The system (100) as claimed in claim 1, wherein the system (100) further includes a sensing mechanism to detect the fill level of the receptacle (65a) to activate and deactivate the holding unit (80) and the stack support arrangement (85).

13. The system (100) as claimed in claim 1, wherein the slider (95) is an "L" shaped member which moves linearly along a sliding path configured on the workbench (60), the slider (95) is adapted to move linearly towards the movable conveyor unit (92) after the receptacle (66) is filled with a predefined number of folded items.

14. A method (200) for delivering folded items, the method (200) comprising the steps of:
feeding atleast one empty receptacle from a feeding area to a conveying unit of a conveying mechanism;
transporting the atleast one empty receptacles to a workbench using the conveying unit, wherein the conveying unit is capable of holding atleast one empty receptacle received from the feeding area and travel upward to transfer the atleast one empty receptacle (65) towards the platform;
releasing and pushing the empty receptacle from the conveying unit towards the workbench platform;
holding at least one receptacle on the workbench using a holding unit arranged at a side portion of the workbench, the holding unit engages with the sides of the empty receptacle;
configuring multiple compartments using a stack support arrangement within the receptacle to support a predefined number of folded items or a stack of folded items within the corresponding compartments;
releasing a stack of folded items into the corresponding compartments of the receptacle arranged at a delivery area on the work bench using a handling apparatus;
pressing the stack of folded items within the receptacle by a pressing mechanism to support and ensure the alignment of the folded items within the receptacle;
releasing the stack of folded items from the hold of stack support arrangement, pressing mechanism and the holding member; and
transferring at least one filled receptacle to a final delivery area using a transfer mechanism that includes a slider to move the filled receptacle, with the slider returning to its original position after delivering the filled receptacle.

15. The method (200) as claimed in claim any of the previous claims, wherein the feeding area includes a conveyor belt to feed the empty receptacle towards the at least one conveying unit, wherein the empty receptacles are fed manually into the feeding area and the conveyor belt conveys the empty receptacles towards the conveying unit.
